Europäisches Patentamt

European Patent Office

Office européen des brevets

(11) Publication number: **0 211 211**
**A2**

# EUROPEAN PATENT APPLICATION

(21) Application number: 86108591.8

(51) Int. Cl.⁴: **G02F 1/133**

(22) Date of filing: 24.06.86

(30) Priority: 29.07.85 US 759789

(43) Date of publication of application:
25.02.87 Bulletin 87/09

(84) Designated Contracting States:
DE FR GB

(71) Applicant: **International Business Machines
Corporation
Old Orchard Road
Armonk, N.Y. 10504(US)**

(72) Inventor: **Glass, David Wayne
119 Jolomic Lane
Georgetown Kentucky 40324(US)**
Inventor: **Porter, Jean Marie
625 Cane Run Road
Georgetown Kentucky 40324(US)**
Inventor: **Routt, Wilson Morgan, Jr.
119 Arcadia Park
Lexington Kentucky 40503(US)**

(74) Representative: **Siccardi, Louis
Compagnie IBM France Département de
Propriété Intellectuelle
F-06610 La Gaude(FR)**

(54) **Liquid crystal display.**

(57) Front polarizer 17 is spaced from liquid crystal material 3 and lamp 19 is located in that space. Light from lamp 19 is scattered and reflected by reflector 15, and is seen by a viewer 23 from a position past front polarizer 17. Poor contrast and shadow images are avoided, as the effect is functionally comparable to back lighting. Practical reverse video is achieved when front polarizer 17 and rear polarizer 13 are oriented to pass light of the same plane of polarization.

FIG. 1

# LIQUID CRYSTAL DISPLAY

## Description of the Invention

### Technical Field

Twisted nematic field effect liquid crystal displays employing two polarizers typically must be mounted above a light source to be back lighted. Such mounting requires space behind those display elements including the liquid crystal material and polarizers. A clear display of high contrast is obtained from the light passing through the rear polarizer, then through the liquid crystal material, and then through the front polarizer. The form of the display is defined by the pattern of electrodes to which an electrical potential is applied across the liquid crystal material. The nematic liquid crystal material responds to an electric field by ceasing to rotate the plane of polarization of light in those areas in the field.

### Background Art

Liquid crystal displays conventionally comprise the liquid crystal material, a rear polarizer, and a reflector behind the rear polarizer. The function of the rear reflector has been to reflect light originating from the general area of the front of the display. The light source typically has been ordinary ambient light. Such conventional displays had the front polarizer physically proximate to the front of the liquid crystal material.

A conventional back lighted display is generally structurally similar except without a reflector. A light is positioned between the rear polarizer and a circuit card located behind the display. This requires inordinate space. Moreover, heat dissipation is such a problem that the light magnitude is typically limited by heat considerations.

Back lighting has been recognized as providing a display of improved definition and contrast. Back lighting has been considered essential when the display is to be light characters on dark background (sometimes termed reverse video) as such displays when front lighted have been very dim.

US-A-4,385,805 is cited as illustrative of the state of relevant liquid crystal art. It employs a light source located near the rear to achieve a back lighting effect, which this invention accomplishes by front lighting.

## Disclosure of the Invention

In accordance with this invention, a liquid crystal display with back-lighted effect is achieved without actually locating the light source behind the back polarizer. The display system may be conventional in comprising a nematic material between polarizers with a reflector located behind the back polarizer, all mounted on a circuit board. It is characterized in that light from a lamp or other source is directed toward the reflector from behind the front polarizer. Light reaching the reflector is not affected as it would be had it passed through the two polarizers and the liquid crystal material. Light reaching the reflector is inherently scattered and diffused, and is then reflected forward as an effective back light source.

A high-contrast display is achieved with the lamp located elsewhere than in the area of the back of the display. Additionally, this makes possible a practical front light display of light images on dark background.

## Brief Description of the Drawing

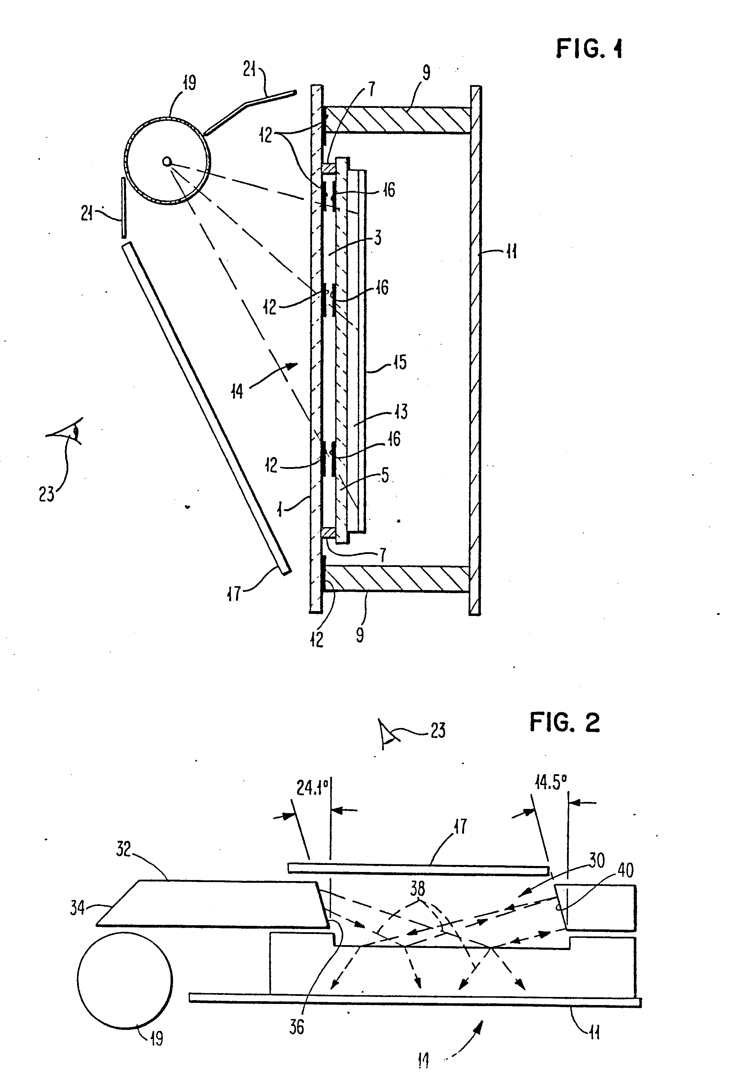

This display is illustrated by the drawing in which Fig. 1 is a sectional side view of illustrative elements of the preferred embodiment;

Fig. 2 illustrates a preferred compact lighting system employing this invention; and

Fig. 3 illustrates the Fig. 2 embodiment as seen from the front without a cover.

## Best Mode for Carrying Out the Invention

As shown in the drawing, front glass 1 forms one side of a chamber containing liquid crystal material 3. The opposite side of material 3 is defined by rear glass 5. The top and bottom sides of the chamber containing liquid crystal material 3 are standard epoxy or glass frit seals 7.

Front glass 1 extends past the liquid crystal material 3 at both the top and bottom to be contacted by standard elastomeric conductors 9. Elastomeric conductors 9 make pressure connections with circuit card 11 at appropriate terminal areas and similarly make electrical connection with conductors 12 on front glass 1. Immediately behind rear glass 5 is rear polarizer 13. Immediately behind rear polarizer 13 is reflector 15.

Reflector 15 may be an aluminized surface, such as aluminum vapor deposited on a polyethylene terephthalate resin surface or other substrate material. The substrate surface of reflector 15 is minutely roughened so as to present a semi-diffuse reflective surface which will scatter and thereby tend to return diffused light generally evenly through rear polarizer 13 and liquid crystal material 3.

Except for the absence of a front polarizer immediately next to the front glass 1, the assembly 14, which comprises front glass 1, liquid crystal material 3, rear glass 5, rear polarizer 13, reflector 15, connectors 9, and circuit card 11, would be implemented at present as essentially identical to commercially available display units. Such units are sold by several commercial vendors as liquid crystal display modules (LCDMs).

The front polarizer, front glass 1, liquid crystal material 3, rear glass 5, rear polarizer 13, and reflector 15 are informally known by those skilled in the art as bottles. The single type of liquid crystal material used in commercially available bottles is twisted nematic. Clearly, however, other materials which rotate the plane of polarization in one energy field and which cease this effect when in another, could be used to implement this invention.

As is conventional, the front glass 1 and the rear glass 5 carry transparent, conductive leads 12 on front glass 1 and 16 on rear glass 5, typically of vapor deposited indium tin oxide. Leads 12 and 16 define opposing segments selectively energized under control of circuit card 11 to form an electric field in character or graphic patterns in material 3. Liquid crystal material 3, in its unexcited state, normally rotates the plane of polarization of light passing therethrough in the direction crossing rear glass 5 and front glass 1. Liquid crystal material 3 is affected by the electric field to cease that rotation of the plane of polarization of such light. Light of random polarization is polarized to one plane of polarization by rear polarizer 13 and then image segments are not rotated in polarization where opposing segments of conductors 12 and 16 are electrically energized. The light then encounters front polarizer 17, where either the image segments are not passed and therefore appear dark or the background is not passed and therefore appears dark. The first display effect, dark image on light background, is obtained by front polarizer 17 having a plane of polarization orthogonal to (rotated 90 degrees from) that of rear polarizer 13. Light at the image segments is not rotated and is therefore blocked by front polarizer 17. The second display effect is obtained by front polarizer 17 having the same plane of polarization as that of polarizer 13. Light at the image section is not rotated by liquid crystal material 3, but polarizer 17 is oriented to pass the unrotated light. The light at background areas is rotated and is therefore blocked by polarizer 17.

This embodiment differs from the prior art design and use of bottles by having the front polarizer 17 spaced from front glass 1 sufficiently to permit light to be directed between front polarizer 17 and front glass 1. This embodiment also differs from known prior art in having the primary light source, such as light from lamp 19, positioned between front polarizer 17 and front glass 1. Additionally, light from lamp 19 may be directed toward reflector 15 by a reflector or other light-directing system 21. Lamp 19 may be a standard fluorescent bulb. Where a light directing system 21 is employed, lamp 19 may be located on a side of the display with the system 21 terminating generally where lamp 19 is shown in the drawing (see the embodiment of Fig. 2). For a dark-characters-on-white-background display, which is generally preferred, polarizers 13 and 17 are oriented to pass light polarized in orthogonal planes of polarization. Accordingly, since they do not pass light polarized at 90 degrees to their direction of orientation, light which is restricted to one direction of polarization by one of the polarizers 13 and 17 and then rotated by material 3 in the absence of an electric field, will pass through the other of the polarizers 17 and 13 respectively, thereby creating a light area in regions defined by locations across material 3 at which no electrical field is applied. An image, such as a symbol or character, in a surrounding, light background is created by the application of ordinary light to the reflector 15, a surface which then scatters the light to form a diffused, even light distribution across the surface of rear polarizer 13 which is directed outward through front polarizer 17 toward a viewer 23. This general implementation is true also for the known bottles as described above.

The diffused light from reflector 15 emerges from rear polarizer 13 having only that component which is polarized in the orientation of polarizer 13. That light then passes through liquid crystal material 3. Areas of material 3 corresponding to the image are electrically activated and therefore do not rotate the plane of polarization of that light, the activated image patterns being created in the standard manner by electrical signals from circuit card 11. Light emerging from material 3 then encounters front polarizer 17. Light from activated areas of material 3 does not pass through front polarizer 17, since its polarization is not rotated by material 3. Front polarizer 17 does pass light from the unactivated areas. Accordingly, viewer 23 sees dark areas where the image segments are electrically activated, with the other areas being light.

The prior use of the bottles with a rear reflector 15 included using only front light, substantially all of the incoming light passing through both polarizers 17 and 13. Light was necessarily diminished just by passing through front polarizer 17 toward material 3 since such solids absorb and reflect some light. Also, with the display in operation, which is necessarily the significant condition in considering display clarity, electrically activated segments of material 3 do not rotate light passing through it and such non-rotated light would not be passed by rear polarizer 13. This causes an image on rear polarizer 13 (unless the incoming light is highly distributed, rather than coming from one or more dominant locations). This image is seen by the observer of the display as a shadow effect appearing in conjunction with the image formed by the light passing back through the liquid crystal material 3 from the reflector 15 and blocked by front polarizer 17.

These two effects are cumulative, the first reducing light and the second causing confusion of the image and normally slightly reducing the typical amount of reflected light. This invention avoids these two effects by injecting light behind the front polarizer 13 towards the reflector 15. This eliminates the front polarizer 17 as an absorbing and reflecting element of incoming light. This also eliminates the formation of the rear-polarizer image, since the incoming light at the liquid crystal material 3 has not been previously polarized and rotation or not by material 3 does not result in polarization. Therefore, images are not created by the rear polarizer and the shadowing effect is eliminated.

This invention obviates another previous limitation of front lighted liquid crystal displays, the inability to effectively display light images on dark surrounding background (reverse video effect). Conventionally, reverse video has been implemented by back lighting with a lamp behind rear polarizer 13, with no reflector 15. Reverse video is achieved through this invention by orienting polarizers 13 and 17 to pass light in the same plane of polarization.

In the reverse video mode, non-energized areas of the display appear black. The electric field at image area segments lightens those segments. This reverse video application is not achieved satisfactorily with similar displays having front polarizers immediately next to the front glass because, except for electrically energized areas of the display (i.e. the image segments energized), front light is polarized such that it is blocked by the rear polarizer 13. Therefore, very little light reaches back reflector 15. This results in a dim display with negligible light shining through the activated areas.

By injecting the randomly polarized light between the front polarizer 15 and the front glass 1 in accordance with this invention, a greater light level exists at the rear reflector 15. None of the light reaching rear polarizer 13 is polarized, so light in the background areas is not completely blocked as it would be had it passed through front polarizer 17. Therefore, reflector 15 receives and diffuses sufficient light giving a display of bright image surrounded by a black background. Fig. 2 is a side view illustrative of a compact embodiment of a display in which the image area 30 is less than two inches wide. Such a display normally could contain up to three parallel lines of ordinary text, spaced across image area 30. In the embodiment shown, that width across image area 30 is 22 millimeters. The display in the embodiment contemplated is to be associated with a typewriter and therefore has a length across its front sufficient to display, the longest line which may be typed by the typewriter as a single line.

The display assembly 14 including circuit board 11 is essentially as described above. The lighting system comprises lamp 19, which is contiguous to light guide 32. Light from lamp 19 enters guide 32 through its lower surface. Guide 32 is a trapezoidal solid of glass, plastic, or other optically transparent material, having a flat, outer side 34 slanted toward image area 30 and flat, inner side 36 slanted away from image area 30.

A significant portion of the light entering guide 32 undergoes total internal reflection at surface 34 and is directed across guide 32 toward inner surface 36. Surface 34 may be reflectively coated if desired to reflect light not meeting conditions for total internal reflection. In both cases, efficiency of light transmission depends on surface 34 being smooth and well defined.

Light directed to inner surface 36 by guide 32 is refracted by surface 36 so as to be incident on the display surface 30. Light exiting surface 36 is shown illustratively in Fig. 2 as dashed vectors 38. A part of light 38 is transmitted into the display assembly 14 and the remainder is either absorbed by the surface of assembly 14 or reflected by that surface toward flat, mirrored surface 40, positioned across display area 30 opposite surface 36 and slanted toward display area 30. Surface 40 reflects incident light reflected from assembly 14 back toward image area 30, where part is transmitted and part is reflected again.

Light transmitted into assembly 14 is diffused when it reaches the rear reflector 15 and is returned to form an image as described with respect to Fig. 1. Front polarizer 17 is parallel with display area 30, with inner surface 36 and mirrored surface 40 located in an area separating the front polarizer 17 and the assembly 14. The observer 23 is positioned to look through front polarizer 17 to the assembly 14. Typically, such a liquid crystal system provides the best image to an observer 23 positioned about 20 degrees from the optical path, as suggested in Fig. 2.

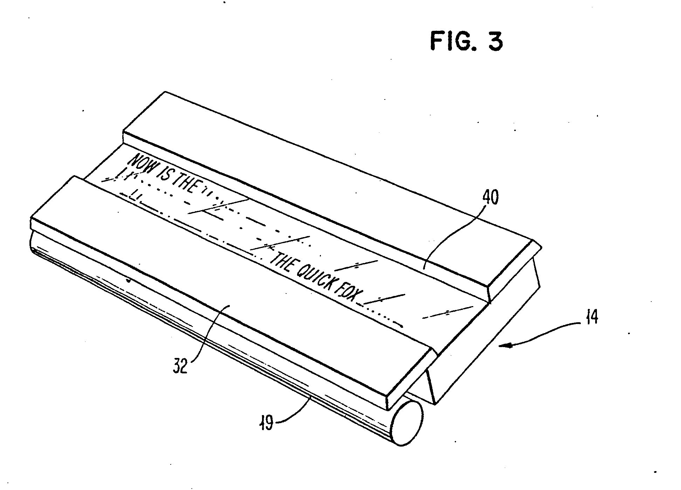

Fig. 3 is an orthogonal view illustrative only of the overall configuration of the display of Fig. 2 as seen from the front. In practice, the elements shown in Fig. 3, except the image area 30, would be hidden by a conventional cover, typically of molded plastic.

Lamp 19 in the embodiment of Fig. 2 is a fluorescent tube extending across substantially the entire width of the display. The tube preferably is apertured or otherwise designed so as to favor light output directed toward guide 32. (Alternatively, this may be effected by a number of individual bulbs positioned side-by-side along the length of the display, possibly with a reflector to direct all of the light toward guide 32.) Such an extended light source distributes the incoming light, and this would mitigate the shadow effect in a conventional display discussed in connection with Fig. 1 caused by incoming light being rotated by activated areas and then being blocked by the rear polarizer. Accordingly, the light system of this embodiment is useful for a conventional, front lighted display. To the extent the light source is not well distributed, the shadow effect remains, as well as the loss of illumination as discussed resulting from incoming light passing through the front polarizer. To avoid such shadowing and reduced illumination, the polarizer 17 is positioned past the light sources in accordance with this invention.

Alternative light paths include positioning the lamp 19 in a central location and providing a light guide 32 on both sides of the display so that mirrored surface 40 is replaced by the end of a second light guide 32 with outer surface slanted to refract exiting light toward display are 30 in the manner of surface 36. An alternative with respect to Fig. 1 is to thinly coat the inner surface of front polarizer 17 to increase reflection of light from lamp 19, while still transmitting light from assembly 14 to viewer 23.

A present design has surface 36 at 24.1 degrees from vertical and surface 40 14.5 degrees from the vertical. These were selected on the theory that the primary direction of light exiting surface 36 in the specific system would encounter the surface of display 14 at 14.5 degrees and therefore will be reversed completely in direction by a surface 40 at 14.5 degrees. For other designs, the angles depend on the characteristics of the lighting system, particularly the refractive characteristics, and will vary depending upon a specific design. The surfaces shown may be replaced by other optical surfaces and elements to direct light for the purposes of this invention in a particular implementation.

## Claims

1. A liquid crystal display (14) having a front polarizer (17), a rear polarizer (13), a liquid crystal material (3) between said front polarizer and said rear polarizer, means (12, 16) to activate said light crystal material (3) in patterns forming images, a reflector (15) behind said rear polarizer, characterized in that it includes means (19, 21, 32) to direct light from between said front polarizer and said rear polarizer toward said reflector at an orientation at which said reflector will substantially reflect scattered light through said polarizers and said material.

2. The liquid crystal display as in claim 1 also comprising a lamp (19) and in which said front polarizer (17) is spaced from said liquid crystal material (3) in the region of said lamp, with said lamp located in a region between said material and said front polarizer.

3. The liquid crystal display as in claim 1 in which said means to direct light comprises a lamp (19) and an optical guide member (32) having a light receiving surface (34) positioned to receive light from said lamp and having a light exiting surface (36) positioned in a region between said material (3) and said front polarizer (17), said exiting surface (36) refracting exiting light toward said reflector (15).

4. The display as in any one of the preceding claims in which said front polarizer (17) and said rear polarizer (13) are oriented in the same plane of polarization and said liquid crystal material (3) rotates the plane of polarization of light to provide displays of light image on dark background.

5. The display as in claim 2 or 3 in which said lamp (19) is an elongated, fluorescent tube.

FIG. 4

FIG. 2

# FIG. 3

NOW IS THE

THE QUICK FOX

40

14

32

19